(19) Europäisches Patentamt

European Patent Office

Office européen des brevets

(11) EP 1 480 028 A1

(12) **DEMANDE DE BREVET EUROPEEN**

(43) Date de publication:
**24.11.2004 Bulletin 2004/48**

(51) Int Cl.7: **G01J 11/00**, G04F 13/02

(21) Numéro de dépôt: **03447116.9**

(22) Date de dépôt: **21.05.2003**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(71) Demandeur: **UNIVERSITE LIBRE DE BRUXELLES B-1050 Bruxelles (BE)**

(72) Inventeurs:
• **Kockaert, Pascal
  1150 Bruxelles (BE)**

• **Haelterman, Marc
  1180 Bruxelles (BE)**
• **Emplit, Philippe
  1330 Bruxelles (BE)**

(74) Mandataire: **Van Malderen, Joelle et al
Office Van Malderen,
Place Reine Fabiola 6/1
1083 Bruxelles (BE)**

(54) **Méthode et dispositif pour la caractérisation d'impulsions optiques**

(57) La présente invention se rapporte à une méthode et un dispositif pour la caractérisation d'impulsions optiques isolées ou au sein d'un train d'impulsions. La méthode et le dispositif sont utilisables pour caractériser des impulsions courtes et ultracourtes.

La méthode comprend une étape de création de deux images de spectres décalés, à partir de la même impulsion ou du même train d'impulsions. À partir d'un signal de battement entre deux fréquences superposées des deux spectres, la méthode de l'invention permet de reconstruire la phase spectrale de l'impulsion. Dans sa forme préférée, le dispositif de l'invention comprend un prisme de Wollaston (3) et un polariseur (6), pour créer deux faisceaux interférant après avoir parcouru le même chemin optique depuis le lieu de séparation du faisceau en deux parties.

FIG. 1

# EP 1 480 028 A1

**Description**

## Objet de l'invention

La présente invention se rapporte à des méthodes et dispositifs qui ont pour but de caractériser des impulsions optiques, en particulier des impulsions courtes et ultra-courtes.

## État de la technique

De nombreux phénomènes qui font intervenir des impulsions lumineuses demandent, pour être compris ou maîtrisés, que l'on connaisse non seulement la dépendance temporelle de l'intensité lumineuse, mais également la variation de la phase au cours du temps. Une connaissance équivalente à celle de l'amplitude et de la phase en fonction du temps du champ électrique associé à l'impulsion lumineuse est celle de la densité spectrale et de la phase spectrale.

Deux aspects totalement différents limitent la mesure des impulsions ultracourtes. Le premier empêche de mesurer directement les données temporelles. Le second empêche la mesure complète des données spectrales.

La résolution temporelle des appareils de mesure est limitée. En effet, la mesure de l'évolution temporelle d'un évènement physique nécessite de maîtriser un phénomène plus court que celui qu'on observe et de l'exploiter pour parvenir à découper le phénomène étudié en tranches temporelles qui permettent la reconstitution de l'évènement. Sachant que les impulsions courtes (1-100ps) et ultracourtes (1-100fs) sont les phénomènes les plus brefs générés par l'homme à l'heure actuelle, il semble évident que la mesure directe de l'évolution temporelle du champ électrique est illusoire.

Il est souvent fait mention de la mesure du spectre associé à une impulsion et il est utile de rappeler, à cet égard, qu'il faut se méfier de l'abus de langage souvent pratiqué en la matière et qui consiste à désigner par « spectre » la « densité spectrale », c'est-à-dire l'intensité du spectre. Cette mesure ne donne aucun accès à la phase spectrale. En outre, les détecteurs qui permettent de transformer un signal optique en signal électrique sont toujours sensibles à l'intensité du champ électrique et totalement insensibles à sa phase. Ceci empêche de recueillir des informations directes sur la phase spectrale de l'impulsion et donc de reconstruire le spectre.

Les techniques de caractérisation d'impulsions lumineuses existantes sont liées à ladite problématique de mesurer la phase spectrale. L'un des développements les plus récents est retrouvé dans l'article « Simple amplitude and phase measuring technique for ultra-high répétition rate lasers », de Kockaert *et al.,* IEEE Photonics Technology letters, vol. 12, no. 2, février 2000. Dans cet article, le dispositif qui est décrit effectue la caractérisation d'un train d'impulsions produit par un laser. Le dispositif emploie deux réseaux, des miroirs et une fente adaptée à filtrer deux modes voisins du spectre, de façon à créer un battement à basse fréquence entre ces deux fréquences voisines. La phase dudit battement est détectée, ce qui permet de reconstruire la phase de l'impulsion initiale. La structure de ce dispositif est assez complexe. En outre, l'emploi d'une fente rend cette technique inadaptée à l'analyse d'impulsions isolées ou à taux de répétition bas.

D'autres techniques connues sont basées sur l'application d'effets optiques non linéaires et ne sont applicables que dans le cas d'impulsions à haute puissance de crête. Pour l'analyse d'impulsions qui sont utilisées dans le domaine des télécommunications optiques, ces techniques ne peuvent être appliquées.

Le document US6025911 est relatif à un dispositif utilisant des moyens pour créer deux spectres décalés à partir d'un faisceau optique correspondant à une impulsion. Un filtre à deux fentes est utilisé, ainsi que des détecteurs non linéaires, pour caractériser l'impulsion.

## Buts de l'invention

La présente invention vise à fournir une méthode et un dispositif pour la caractérisation d'impulsions optiques, en particulier d'impulsions courtes ou ultra-courtes, qui fonctionnent de façon linéaire et qui soient utilisables pour la caractérisation d'une impulsion lumineuse isolée ou contenue dans un train d'impulsions.

## Élements caractéristiques de l'invention

La présente invention se rapporte à une méthode pour la caractérisation d'une impulsion optique isolée ou se trouvant au sein d'un train d'impulsions, ladite impulsion se propageant sous forme d'un faisceau de rayons lumineux, ladite méthode comprenant l'étape de créer, à partir dudit faisceau, sur une même droite, appelée « ligne spectrale », deux images du spectre associé à ladite impulsion, lesdites images étant décalées d'une distance connue, de sorte qu'en chaque point de ladite ligne spectrale, se trouvent deux composantes spectrales superposées, appartenant respectivement aux dites deux images du spectre, ladite méthode étant caractérisée par le fait qu'elle comprend en outre les étapes suivantes :

- détecter en une pluralité de points de ladite ligne spectrale, l'intensité lumineuse qui consiste en un signal de battement entre lesdites deux composantes spectrales superposées,
- déterminer en ces points, la phase dudit signal de battement,
- dériver de ladite phase du signal de battement, la phase spectrale de ladite impulsion, en ces points.

Selon la méthode de l'invention, dans le cas où ladite impulsion fait partie d'un train d'impulsions à un taux de répétition donné, le décalage entre les deux images égale un nombre entier de décalages spectraux entre deux modes voisins du spectre associé audit train d'impulsions.

De plus, l'invention se rapporte à un dispositif pour mettre en oeuvre la méthode de l'invention, ledit dispositif comprenant un élément dispersif et une lentille pour créer sur une droite, appelée « ligne spectrale », une image du spectre en fréquence associé à ladite impulsion, caractérisé en ce que ledit dispositif comprend en outre :

- un prisme de Wollaston, pour créer deux faisceaux distincts sans différence de chemin optique, en déviant différemment, mais de manière symétrique par rapport à l'axe optique, les deux composantes de polarisation des rayons contenus dans ledit faisceau,
- un polariseur, pour faire interférer lesdites deux composantes de polarisation,
- des moyens de détection, pour détecter l'intensité et la phase en plusieurs points de la ligne spectrale.

Selon une forme d'exécution spécifique du dispositif de l'invention, ce dispositif comprend en plus un dispositif afocal, placé entre ledit polariseur et l'élément dispersif. Ce dispositif afocal peut consister en deux lentilles, constituant un télescope. Alternativement, ce dispositif afocal peut consister en un assemblage de deux prismes anamorphiques.

Dans une autre forme d'exécution, l'invention se rapporte également à un dispositif pour mettre en oeuvre la méthode de l'invention, ledit dispositif comprenant un élément dispersif et une lentille pour créer sur une droite, appelée « ligne spectrale », une image du spectre en fréquence associé à ladite impulsion, caractérisé en ce que ledit dispositif comprend en plus :

- au moins un miroir, ledit miroir comprenant deux parties de miroir décalées l'une vis-à-vis de l'autre.
- des moyens de détection, pour détecter l'intensité et la phase en plusieurs points de la ligne spectrale.

Lesdites deux parties de miroir peuvent être décalées par une rotation d'une partie vis-à-vis de l'autre partie. Alternativement, ces deux parties de miroir peuvent être décalées par une translation d'une partie vis-à-vis de l'autre partie.

Dans un dispositif de l'invention, lesdits moyens de détection peuvent consister en une caméra à balayage. Alternativement, lesdits moyens de détection peuvent consister en une photodiode rapide associée à un oscilloscope rapide.

Dans un dispositif de l'invention, ledit élément dispersif peut consister en un réseau de diffraction. Alternativement, cet élément dispersif peut consister en un prisme.

### Brève description des figures

La figure 1 montre un dispositif selon une forme d'exécution préférée de l'invention.

Les figures 2a et 2b montrent les profils temporels et les spectres associés à une impulsion isolée (fig. 2a) et à un train d'impulsions (fig. 2b).

La figure 3 montre les deux spectres décalés, associés à une même impulsion isolée.

La figure 4 montre des traces de battement mesurées avec une caméra à balayage.

La figure 5 montre la superposition de deux spectres discrets et décalés, associés à un train d'impulsions.

La figure 6 montre également des traces de battement, en fonction du temps, associées à un train d'impulsions avec une puissance de sortie de la source de 0,1 mW.

La figure 7 montre la densité spectrale, associée aux impulsions provenant de la source laser, lorsque celle-ci délivre un signal de 0,1 mW.

La figure 8 compare le profil temporel d'une impulsion au profil reconstruit sur base des mesures faites selon la méthode de l'invention, lorsque la source délivre un signal de 0,1 mW.

La figure 9 montre les profils temporels de l'amplitude et de la phase d'une impulsion, reconstruits selon la méthode de l'invention.

La figure 10 montre la densité spectrale et la phase spectrale, mesurées selon la méthode de l'invention.

Les figures 11 et 12 montrent des formes d'exécution alternatives d'un dispositif capable d'effectuer la méthode de l'invention.

**Description détaillée de l'invention**

L'invention est liée au principe connu dans l'état de la technique, notamment de l'article cité, de mesurer la phase spectrale d'une impulsion en créant un battement entre deux fréquences du spectre associé à l'impulsion et en mesurant la phase associée au battement. En s'arrangeant pour que la période de battement soit longue par rapport aux temps de réponse des dispositifs électroniques employés pour effectuer la mesure, il est possible d'enregistrer l'évolution temporelle du battement, puis d'en extraire sa phase et d'en déduire la phase spectrale de l'impulsion étudiée. La mesure de la densité spectrale peut s'effectuer au départ des mêmes traces de battement ou par une mesure indépendante utilisant un spectromètre classique.

Selon la méthode de l'invention, à la place d'un seul spectre, on fait apparaître dans le plan de Fourier une paire de spectres légèrement décalés, l'un par rapport à l'autre, sur l'axe des fréquences. Dans un spectromètre classique, l'image du spectre est projetée sur une droite, nommée « ligne spectrale », qui représente l'axe des fréquences. L'intensité lumineuse en un point correspond à la densité spectrale. Dans un dispositif de l'invention, deux répliques du spectre sont créées sur la ligne spectrale, et déplacées l'une par rapport à l'autre, de sorte qu'une mesure effectuée en un point quelconque d'un des deux spectres ne peut écarter l'onde associée au second spectre. De ce fait, toute mesure effectuée localement sur le spectre laissera apparaître la superposition de deux composantes de fréquences différentes. Ceci se traduira concrètement par l'existence d'un battement, en chaque point de la ligne spectrale, qui permettra de recueillir des informations sur la phase spectrale.

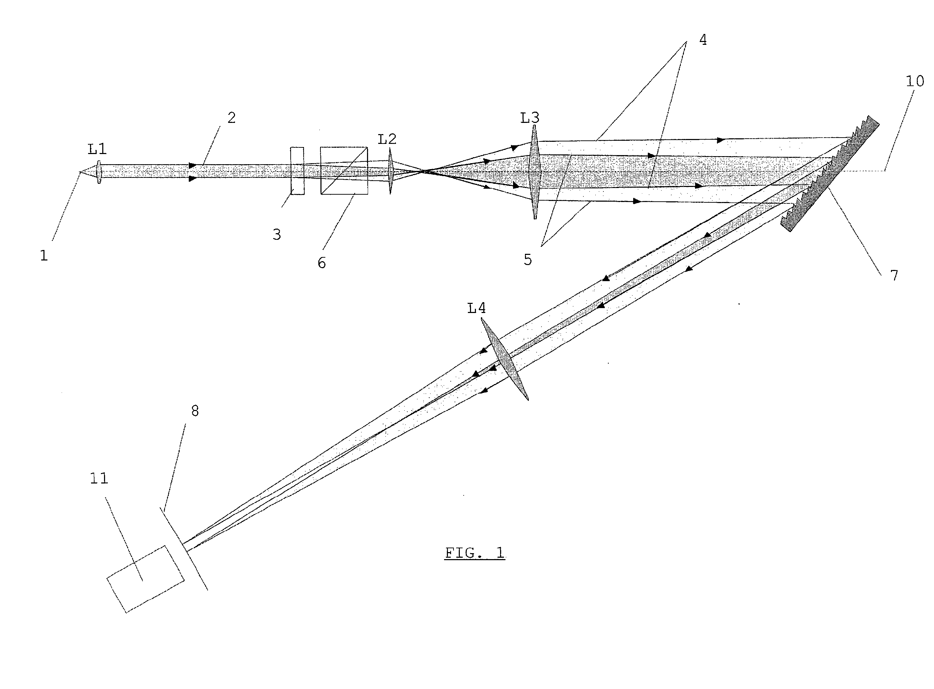

Le dispositif qui représente la forme d'exécution préférée pour réaliser cette superposition des deux spectres est présenté sur la figure 1, qui montre une vue de haut d'un tel dispositif.

Une impulsion optique est générée par une point source 1, qui peut être l'extrémité d'une fibre optique guidant un faisceau provenant d'une source de lumière cohérente, telle qu'un laser, ou le point de focalisation d'une lentille agissant sur un faisceau collimaté, comme par exemple, le faisceau collimaté sortant d'une source d'impulsions laser. L'impulsion est telle que son évolution temporelle est uniforme dans un plan transverse à la direction de propagation. Ceci implique que le profil spatial du faisceau et son évolution temporelle sont indépendants.

Par la présence de la lentille L1, les rayons du faisceau émanant du point source 1 sont rendus parallèles, formant un faisceau collimaté 2. De préférence, les caractéristiques de la source laser sont telles que le faisceau collimaté 2 est polarisé à 45° de la verticale. Si la source utilisée ne présentait pas cette caractéristique, il serait possible de l'induire en plaçant une lame quart-d'onde et un polariseur au niveau du point source 1.

Un prisme de Wollaston 3 se trouve sur le trajet du faisceau 2. En traversant le prisme de Wollaston, la composante de polarisation verticale et la composante de polarisation horizontale du faisceau polarisé à 45° de ces deux directions sont déviées différemment mais de manière symétrique par rapport à l'axe optique 10, créant deux faisceaux 4 et 5, avec une différence de chemin optique nulle. Le prisme de Wollaston 3 est orienté de sorte que l'angle entre les deux faisceaux soit dans un plan horizontal. Les deux faisceaux sont projetés sur la direction de polarisation à 45° de la verticale par le polariseur 6 qui suit le prisme de Wollaston. Cette projection permet d'avoir deux faisceaux qui interfèrent, ce qui ne serait pas le cas s'ils évoluaient avec des directions de polarisation orthogonales.

Les deux faisceaux traversent ensuite un dispositif afocal, qui est suivi par un élément dispersif 7. Dans la forme d'exécution préférée de l'invention, l'élément dispersif est un réseau 7 mais il pourrait s'agir, par exemple, d'un prisme. Dans le cas de la figure 1, le dispositif afocal consiste en un télescope formé par les lentilles L2 et L3. Le télescope permet, d'une part, d'élargir les faisceaux pour qu'ils illuminent pleinement le réseau 7 et permet, d'autre part, de diminuer l'angle de séparation des deux faisceaux 4 et 5. Le rôle important que peut jouer ce télescope est expliqué ultérieurement. Néanmoins, dans la forme d'exécution la plus générale de l'invention, le dispositif afocal peut être absent.

Le réseau 7 étale les différentes composantes spectrales pour chacun des deux faisceaux (4 et 5), selon un axe horizontal. La lentille L4 focalise ensuite tous les rayons parallèles en un point donné du plan 8, qu'on appelle le plan de Fourier. L'étalement des faisceaux dû au réseau 7 étant horizontal, cette lentille L4 focalise l'ensemble des rayons provenant du réseau sur une droite horizontale dans le plan 8, ladite droite étant appelée la « ligne spectrale ». En chaque point x de la ligne spectrale, pour chacun des deux faisceaux 4 et 5, on récolte les ondes de même fréquence. Le résultat de l'existence de deux faisceaux (4 et 5) est la superposition de deux longueurs d'onde en chaque point de la ligne spectrale. Une telle superposition donne lieu à un battement dont la fréquence peut être faible si l'écart angulaire entre les deux faisceaux (4 et 5) est faible. Si cette fréquence est suffisamment basse, le signal de battement peut être observé à l'aide d'un détecteur électronique 11. Il peut s'agir d'une caméra à balayage ou bien d'une photodiode rapide connectée à un oscilloscope rapide. Du signal de battement résolu temporellement, est déduite la phase spectrale qui permet de reconstruire le spectre, moyennant la mesure de la densité spectrale. Celle-ci s'obtient en tournant le polariseur 6 ou le prisme de Wollaston 3 autour de l'axe optique 10, pour qu'un seul des deux faisceaux 4 ou 5 parvienne au réseau. Le montage fonctionne alors en spectromètre classique.

Pour exprimer les choses de manière plus rigoureuse, écrivons que le battement résulte de la présence, en chaque point x de la « ligne spectrale », de deux composantes superposées, de fréquences différentes $\nu_1(x)$ et $\nu_2$

(x) . Lorsque la dispersion du spectre peut être considérée linéaire, le décalage en fréquence est constant pour tous les points : $v_1(x) - v_2(x) = \delta v$. En notant $\omega = 2\pi v$, et la phase spectrale associée à l'impulsion : $\widetilde{\varphi}(\omega(x))$, au point x, les deux ondes :

$$A_k(x)e^{i(\omega_k(x)t + \widetilde{\varphi}(\omega_k(x)))} \qquad k = 1,2$$

sont présentes. Avec $\delta\omega = 2\pi\,\delta v$, l'intensité qui peut être mesurée en ce point est donc donnée par

$$A_1^2 + A_2^2 + A_1 A_2 \cos(\delta\omega t + \widetilde{\varphi}(\omega_2(x)) - \widetilde{\varphi}(\omega_1(x)))$$

La phase spectrale de la modulation à fréquence $\delta v$ correspond donc à

$$\widetilde{\varphi}(\omega_2(x)) - \widetilde{\varphi}(\omega_1(x))$$

qui peut éventuellement être approché par

$$\varphi_{battement} = \frac{d\widetilde{\varphi}}{d\omega}\delta\omega$$

oú $\omega = \frac{\omega_1 + \omega_2}{2}$ est la fréquence moyenne en un point.

La méthode de l'invention est donc caractérisée par la mesure en plusieurs points x de la ligne spectrale, de la phase desdits battements à fréquence $\delta v$, et de la déduction de la phase spectrale des deux faisceaux.

On voit dans les formules précédentes que la phase spectrale $\widetilde{\varphi}(\omega)$ de l'impulsion est obtenue par une simple intégration à partir de la phase des battements, c'est-à-dire que si on connaît la fonction continue $\varphi_{battement}(\omega)$, il suffit de l'intégrer pour obtenir la phase $\widetilde{\varphi}(\omega)$ de l'impulsion, à une constante près, ce qui permet, moyennant la connaissance de l'intensité spectrale, de reconstruire l'évolution temporelle de l'impulsion. L'intensité peut être mesurée par une technique connue et employant le même dispositif que montré à la figure 1. Pour ce faire, le prisme de Wollaston ou le polariseur peuvent être tournés de 45° autour de l'axe optique, afin qu'un seul faisceau atteigne le plan de Fourier au lieu de deux. On aura alors un seul spectre dans ce plan, au lieu de deux spectres décalés. À ce moment, le détecteur 11 peut directement mesurer la densité spectrale (intensité du spectre) le long de la ligne spectrale.

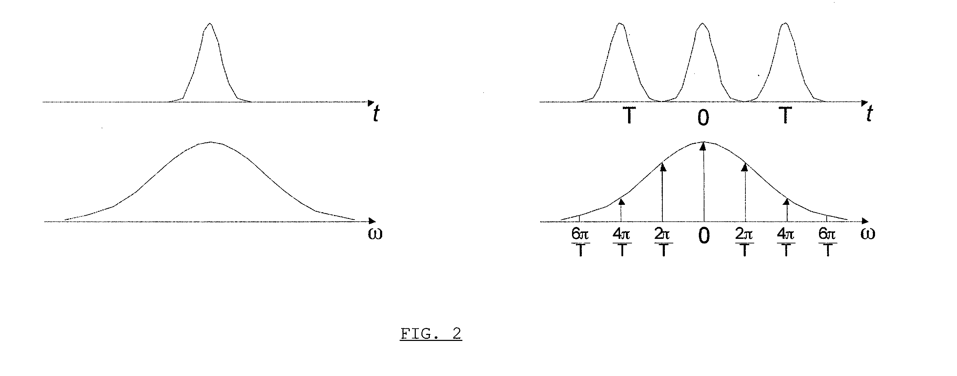

La méthode peut être employée pour caractériser une impulsion isolée ou un train d'impulsions. Les figures 2a et 2b montrent respectivement les profils temporels ainsi que les spectres dans ces deux cas.

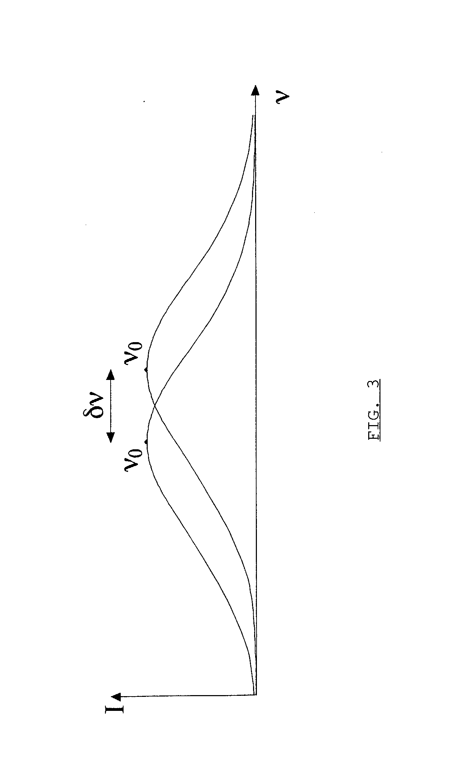

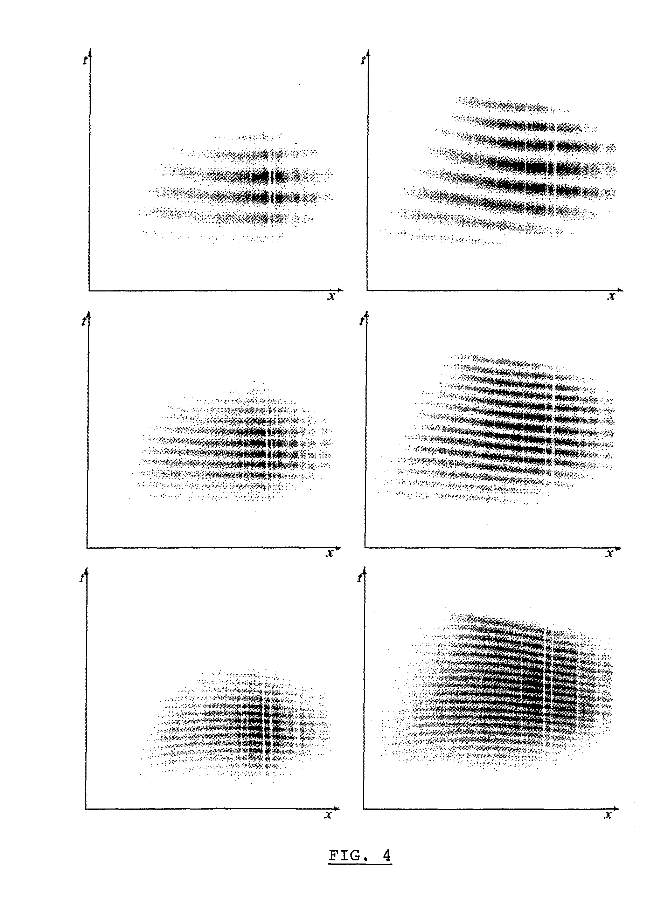

La figure 3 montre les deux spectres superposés et associés à une impulsion isolée. Dans le cas d'une impulsion isolée, on peut mesurer les battements avec une caméra à balayage pourvue d'une fente d'entrée. La caméra est disposée de telle sorte que sa fente d'entrée soit confondue avec la ligne spectrale dans le plan 8. Une telle caméra permet d'obtenir des images telles que celles montrées à la figure 4. Ces images montrent les battements en tous les points x de la ligne spectrale. L'inclinaison des traces de battement dans le plan (x,t) donne une indication immédiate de l'évolution de la phase des sinusoïdes de battement. La connaissance de la phase de ces sinusoïdes de battement permet de déduire, par intégration, la phase spectrale de l'impulsion à caractériser. En l'occurrence, les paires d'images a, b et c sur la figure 4 représentent des traces de battement à trois fréquences de battement différentes. Dans les trois cas, on voit à gauche les résultats pour une impulsion sortant d'un laser, tandis qu'à droite sont montrées les traces après passage de l'impulsion dans une fibre optique à forte dispersion. On voit que la phase spectrale a changé du premier cas au deuxième. La détection de ces traces permet donc de mesurer la variation de phase spectrale subie par les impulsions qui se sont propagées dans ladite fibre optique.

La méthode présente des caractéristiques particulières lorsqu'on l'applique à la mesure d'un train d'impulsions ultrarapide. Par « train ultrarapide », on entend un train d'impulsions pour lequel le délai T qui sépare deux impulsions est proche de la durée d'une impulsion. Lorsqu'il en est ainsi, le spectre est formé de pics discrets et ne peut plus être considéré comme étant continu (voir la figure 2b). Le décalage entre deux pics contigus du spectre correspond au taux de répétition $f_r$ dudit train d'impulsion, avec fr = 1/T.

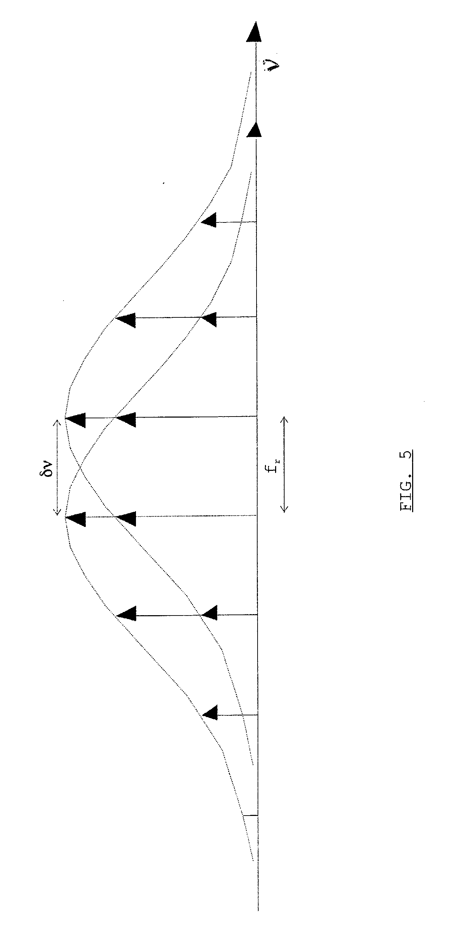

Dans le cas d'un train d'impulsions, il faut prêter attention à ce que le décalage des spectres sur l'axe des fréquences corresponde au décalage $f_r$ entre les pics du spectre (voir figure 5), sans quoi on n'observera pas d'interférences, puisqu'en un point de la ligne spectrale, seule une fréquence serait présente à la fois. L'analyse des signaux de battement qu'on doit effectuer pour déterminer la phase de l'impulsion se fait maintenant seulement en les points x du spectre où l'on retrouve deux pics superposés. En ces points, on effectuera une mesure de phase des battements, qui donnera la différence de phase entre les deux composantes superposées des spectres décalés. En sommant ces différences de phase le long de la ligne spectrale, on obtiendra, à une constante près, la phase de l'impulsion en chaque point où la densité spectrale est non nulle. Il est clair que le décalage entre les deux spectres discrets peut être de plusieurs fois le décalage $f_r$ entre deux modes voisins. On pourrait imaginer un processus de mesure plus complexe que celui présenté ci-dessus, dans lequel le décalage entre les deux spectres correspondrait à un nombre entier (N) de fois la distance entre deux pics voisins : $\delta v = N.f_r$. En enregistrant la phase des battements en tous les points où la densité spectrale est non nulle et dans les deux conditions différentes N=2, d'une part, et N=3, d'autre part, on peut obtenir la même information qu'en effectuant la mesure telle qu'elle a été décrite ci-dessus, lorsque N=1. D'autres ensembles de mesures pourraient être choisis. Quels qu'ils soient, le décalage entre les spectres sera un multiple entier du décalage $f_r$ entre deux modes contigus de ce spectre.

Moyennant cette précaution, la méthode de l'invention s'adapte à la mesure des trains d'impulsions ultrarapides, mais en plus, elle s'en voit simplifiée d'autant. En effet, le nombre de pics étant limité, il n'est besoin de mesurer que quelques signaux de battement, ce qui peut se faire en déplaçant un détecteur unique le long de la ligne spectrale.

## Cas pratiques

Afin de valider le principe décrit ci-dessus, la méthode de l'invention a été mise en oeuvre pour mesurer des impulsions constituant un train d'impulsions à taux de répétition $f_r$ de 2,78 GHz, avec un dispositif tel que représenté à la figure 1. La longueur d'onde de travail est de 1,550 µm et la durée approximative des impulsions est de 70 ps. Les caractéristiques des différents éléments représentés sur la figure 1 sont reprises dans le tableau 1.

Tableau 1

| Elément | Caractéristiques |
|---------|------------------|
| L1 | Lentille de microscope de grossissement x5 |
| L2 | focale f2 = 30 mm, diamètre $\phi$2 = 18 mm |
| L3 | focale f3 = 300 mm, diamètre $\phi$3 = 82 mm |
| L4 | focale f4 = 1000 mm, diamètre $\phi$4 = 80 mm |
| 3 | Prisme de Wollaston : séparation angulaire $\delta w$ = 2', taille 1 cm x 1 cm |
| 6 | Polariseur : taille 1 cm x 1 cm x 1 cm |
| 7 | pas a=1/1.2µm, taille 78 mm X 78 mm, longueur d'onde de blaze $\lambda_{blaze}$ = 1 µm |
| 1 | Source polarisée à 45° de l'horizontale (extrémité d'une fibre optique standard) |

La source est telle qu'on peut modifier fortement l'allure de la densité spectrale sans modifier grandement la durée des impulsions. Ceci permettra de tester facilement la validité de la méthode de mesure. La condition de mesure correspond à une puissance de sortie de la source de 0,1 mW. Ce signal de sortie est amplifié à l'aide d'un amplificateur à fibre optique dopée à l'erbium, ce qui permet d'obtenir environ 8,5 mW en entrée du montage (point 1, figure 1).

L'angle d'incidence sur le réseau 7 est choisi de sorte que le décalage entre les spectres dû au prisme de Wollaston corresponde à l'espacement entre deux modes distants de 2,78 GHz (cfr Figure 5). Nous effectuons le calcul de l'angle d'incidence dans le cas particulier où l'élément dispersif est un réseau. En notant $\alpha$ l'angle d'incidence sur le réseau (mesuré par rapport à la normale) et $\beta$, l'angle de diffraction, on peut mener le raisonnement suivant. Le décalage angulaire dû au prisme de Wollaston est noté $\delta\alpha$. Il induit, à une fréquence donnée, un décalage en sortie $\delta\beta$ qui se calcule au départ de la loi du réseau

$$\sin \alpha + \sin \beta = \frac{n\lambda}{a}$$

où « a » est le pas du réseau, n = 1 est l'ordre de diffraction étudié et λ est la longueur d'onde considérée. On obtient de ce fait,

$$\delta\beta = \frac{\cos\alpha}{\cos\beta}\delta\alpha$$

D'autre part, la dispersion donne, pour une différence de longueur d'onde Δλ :

$$\Delta\beta = \frac{n\Delta\lambda}{a\cos\beta}$$

Tenant compte de ce que $\Delta\lambda = -\frac{\lambda^2}{c}\Delta\upsilon$ où ν désigne la fréquence et c est la vitesse de la lumière, on obtient :

$$\Delta\beta = -\frac{n\lambda^2}{ac\cos\beta}\Delta\upsilon$$

Nous voulons que lorsque $\delta\upsilon = f_r$ et que $\delta\alpha = \frac{f_2}{f_3}\delta w$

$$\Delta\beta = \delta\beta$$

soit cosα = 0,4592, ou encore :

$$\alpha = 62,7°$$

On en déduit que β = 76,2° et donc β-α = 13,5°. Le rapport f2/f3 qui apparaît est dû à la présence du télescope après le prisme de Wollaston. En se basant sur les valeurs obtenues, on déduit que la distance entre deux modes séparés de Δν = 2.78 GHz, est de 112 μm. Cette distance est plus importante que le diamètre du détecteur, ce qui permettra de distinguer les modes, pour autant que la résolution globale du système, due à la taille finie des optiques et du réseau le permette également.

En déplaçant le détecteur sur la ligne spectrale, on repère des maxima locaux d'intensité. Ceux-ci correspondent aux modes. Entre deux modes, il subsiste de l'énergie du fait que le système est à la limite de résolution (le temps de réponse du réseau est à peine plus important que la période de répétition du train d'impulsions).

Conformément aux prédictions faites ci-dessus, on peut vérifier (avec une précision meilleure que 5 μm sur notre mesure) que les modes sont distants d'une valeur proche de 110 μm et que cette valeur correspond au décalage induit par le prisme de Wollaston.

En se plaçant aux positions correspondant aux maxima des modes, on observe, à l'aide d'un oscilloscope rapide, les traces de battement prévues. Le battement disparaît dès que l'on modifie de 45° la direction de polarisation en entrée, ou de 45° l'orientation du prisme de Wollaston ou du polariseur qui suit le prisme de Wollaston. Lorsqu'un de ces deux éléments est tourné de 45° autour de l'axe optique, on observe la disparition des battements.

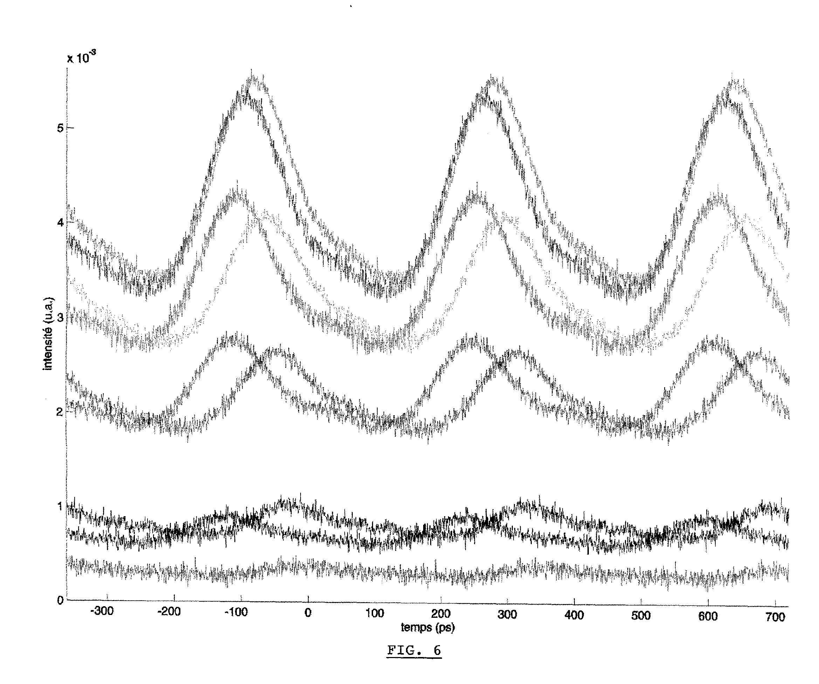

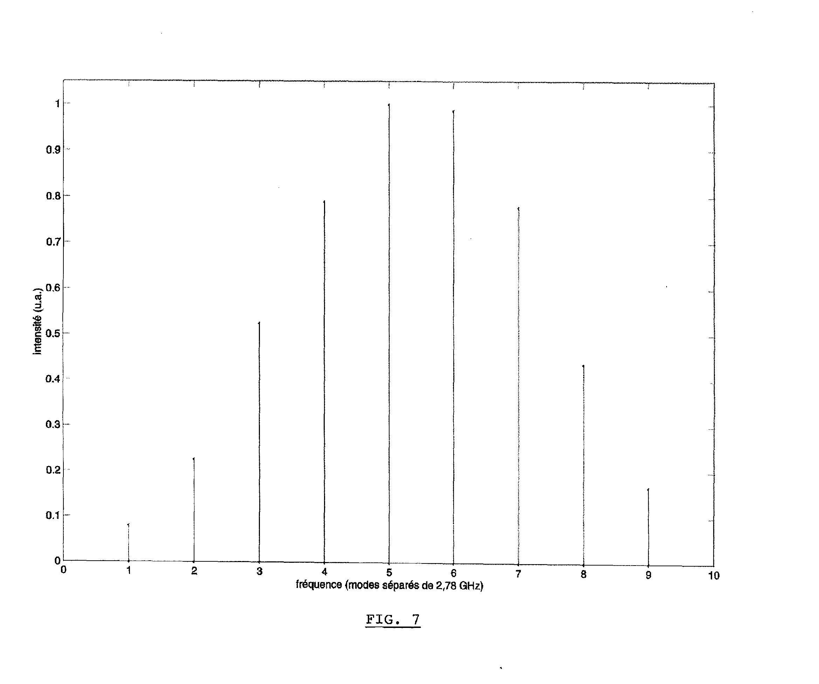

La figure 6 présente les différentes traces associées à toutes les paires de modes superposés détectables du spectre. Des mesures enregistrées avec le prisme de Wollaston tourné de 45°, on peut déduire la densité spectrale (figure 7), tandis qu'on peut extraire l'information de phase des courbes de battement. La phase de ces courbes correspond à la différence de phase spectrale entre deux modes contigus. Cela permet de trouver la valeur de la phase spectrale par sommation cumulée des différences de phase. La sommation cumulée se substitue ici à l'intégration car le spectre est discret.

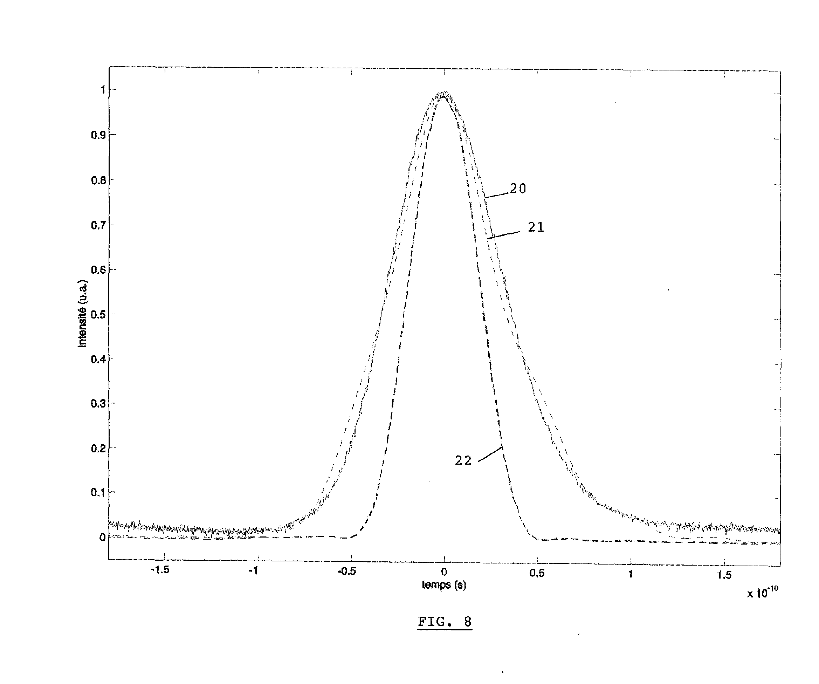

Au départ du spectre, on peut calculer les caractéristiques temporelles de l'impulsion. Parallèlement à cette mesure, on peut utiliser une photodiode ultrarapide pour caractériser l'intensité de l'impulsion en fonction du temps. Cette mesure est présentée sur la figure 8, où l'on retrouve la superposition de l'impulsion mesurée (courbe 20) avec l'impulsion reconstruite sur base des informations spectrales (courbe 21). Pour montrer l'importance de la connaissance de la phase, on a porté sur ce même graphique, le profil d'impulsion (courbe 22) qui aurait été déduit si l'on avait supposé que le spectre était identique à la densité spectrale - c'est-à-dire que la phase spectrale était constante.

On conclut donc que les résultats présentés ici permettent de prétendre à l'exactitude des grandeurs mesurées et attestent de la validité de la méthode de l'invention.

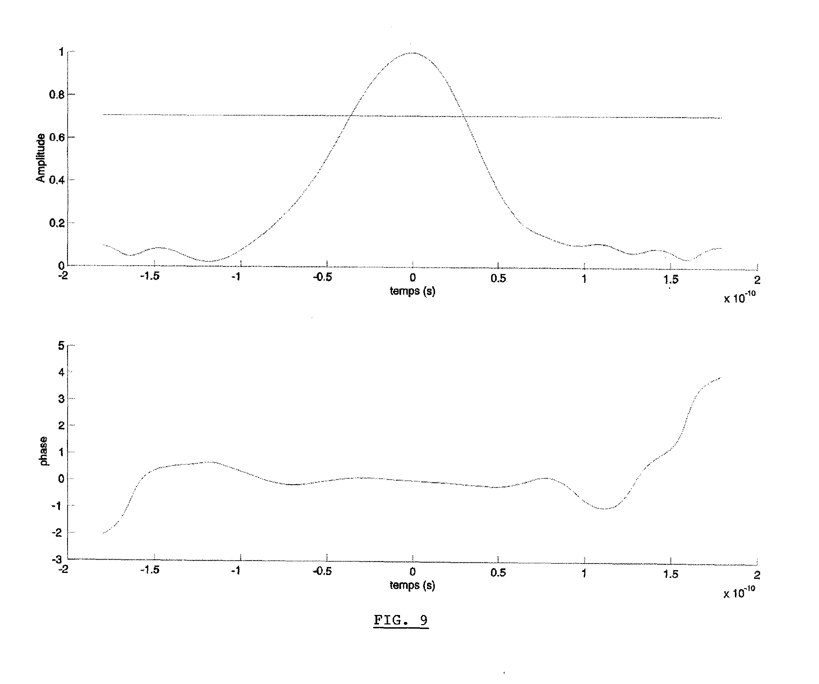

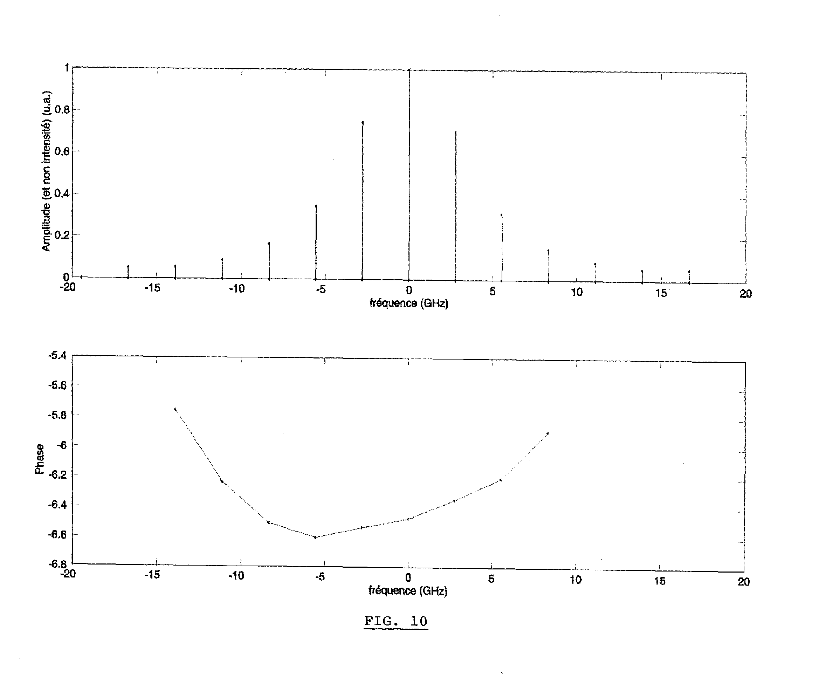

L'intérêt de la méthode de l'invention, par rapport à une mesure directe de l'intensité, est qu'on réalise une mesure en amplitude et en phase - c'est-à-dire du spectre complet plutôt que de la densité spectrale. Les profils de phase sont reportés sur les figures 9 et 10 qui montrent les représentations complètes de l'impulsion dans le domaine temporel et dans le domaine spectral dans le cas où la source émet un signal dont la puissance est de 0,1 mW.

Dans la mesure où le but était de vérifier la validité du principe de mesure, le signal qui a été utilisé pouvait être mesuré avec une photodiode ultrarapide. Il est important de constater que le signal de battement qui est mesuré est toujours à la même fréquence. Si le système de détection est linéaire, le retard induit sur un signal à la fréquence de battement est le même, quelle que soit la paire de modes considérée. On peut donc, en principe, effectuer des mesures de phase spectrale très précises, même si l'on outrepasse la bande passante du détecteur.

Dans le dispositif de l'invention, on a pu constater que le taux de répétition est étroitement lié à l'angle de séparation du prisme de Wollaston ainsi qu'à l'inclinaison du réseau. Afin d'offrir une structure fixe - c'est-à-dire avec une position du réseau déterminée une fois pour toutes - mais d'offrir la possibilité de mesurer des trains à des taux de répétition variés, il est possible de remplacer le télescope par un dispositif afocal à élargissement variable. Un tel dispositif est, par exemple, un assemblage de deux prismes anamorphiques. Ceux-ci effectuent une compression ou une dilatation de la section d'un faisceau collimaté dans une direction. Dans la direction orthogonale, la section du faisceau est inchangée. Dans le dispositif de l'invention, la dimension verticale n'est pas utilisée, et l'on peut donc se contenter d'utiliser un pseudo-télescope sous la forme de ce dispositif de prismes anamorphiques. Il en résulte même un intérêt, dans la mesure où la taille de l'élément dispersif (en hauteur) peut être fortement réduite, puisque la section verticale du faisceau n'est plus élargie.

### Autres formes d'exécution du dispositif

Un dispositif qui est capable d'effectuer la méthode de l'invention peut prendre des formes différentes de celle représentée à la figure 1. On pourrait utiliser un montage tel que montré dans le document US6025911, en appliquant un détecteur linéaire au lieu de non linéaire.

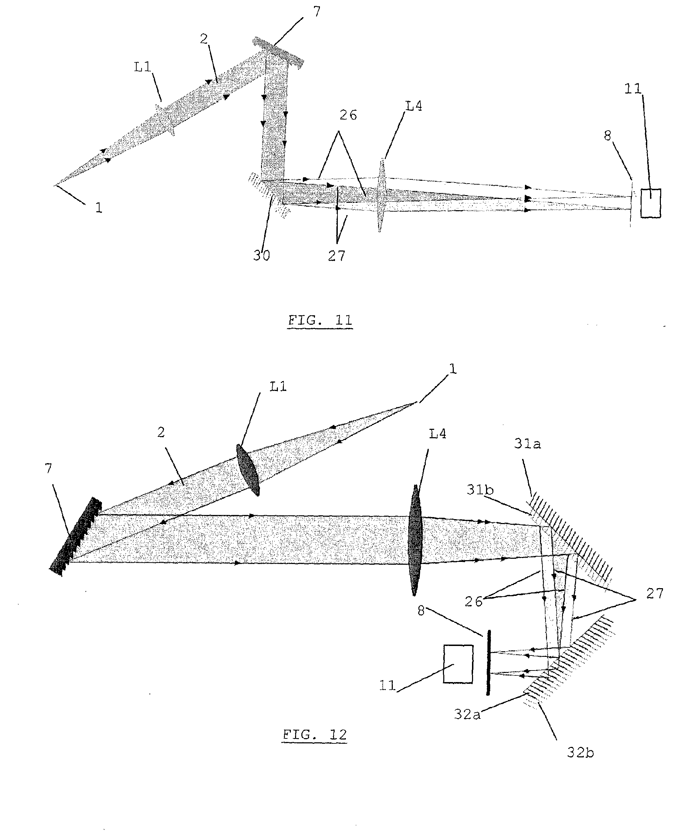

D'autres alternatives sont représentées aux figures 11 et 12. Sur les figures 11 et 12, qui sont des vues de haut, les miroirs 30, 31 et 32 qui sont représentés sont découpés à mi-hauteur (hauteur de l'axe optique du dispositif). Les schémas représentent la superposition des trajets suivis par les faisceaux lumineux sur les parties inférieure et supérieure du montage. Un léger décalage de la position des miroirs sur ces deux parties du montage (inférieure et supérieure) est à l'origine d'une variation du chemin suivi par le faisceau au-delà des miroirs. Les deux faisceaux 26 et 27 qui se propagent sur les deux parties du montage (inférieure et supérieure) interfèrent sur la ligne spectrale, dans le plan de Fourier 8. Cela est dû au fait que la lentille L4 qui suit le réseau est du type le plus souvent utilisé, c'est-à-dire sphérique. De ce fait, outre son action permettant d'obtenir l'image du spectre, cette lentille concentre les faisceaux provenant de la partie haute du montage, ainsi que les faisceaux provenant de la partie basse du montage, au niveau de la ligne spectrale qui se situe à hauteur de l'axe optique.

Les deux dispositifs comprennent un point source 1, qui produit un faisceau qui est ensuite collimaté par une lentille L1. Le faisceau collimaté 2 tombe sur un élément dispersif, de préférence un réseau 7.

Dans le dispositif présenté à la figure 11, le faisceau venant du réseau 7 tombe sur le miroir 30. Les parties supérieure et inférieure du miroir 30 sont décalées l'une de l'autre par la rotation autour d'un axe vertical de la partie supérieure vis-à-vis de la partie inférieure. Ainsi, on obtient les deux faisceaux 26 et 27 qui sont ensuite focalisés par la lentille L4 au niveau du plan de Fourier 8. Sur la ligne spectrale, qui est une droite horizontale dans le plan de Fourier, on retrouve deux spectres décalés, associés respectivement aux faisceaux 26 et 27.

Dans le dispositif présenté à la figure 12, le faisceau venant du réseau 7 est focalisé par la lentille L4 avant de tomber sur les miroirs 31 et 32. La séparation en deux faisceaux 26 et 27 est obtenue par une translation des miroirs 31a, 32a de l'étage supérieur par rapport aux miroirs 31b, 32b de l'étage inférieur.

Il convient de souligner que le dispositif montré à la figure 1 présente un avantage important vis-à-vis des montages alternatifs, notamment le fait que le prisme de Wollaston permet, de façon simple, d'obtenir deux faisceaux 4 et 5 sans différence de chemin optique. Ceci permet d'éviter la difficulté, présente dans les autres dispositifs, de connaître et donc de contrôler cette différence de chemin optique, afin de reconstruire la phase de l'impulsion sur base des battements associés à la superposition des deux spectres décalés. La forme d'exécution de la figure 1 représente donc la forme préférée.

### Revendications

1. Méthode pour la caractérisation d'une impulsion optique isolée ou se trouvant au sein d'un train d'impulsions, ladite impulsion se propageant sous forme d'un faisceau (2) de rayons lumineux, ladite méthode comprenant l'étape de créer, à partir dudit faisceau (2), sur une même droite, appelée « ligne spectrale », deux images du spectre associé à ladite impulsion, lesdites images étant décalées d'une distance connue, de sorte qu'en chaque point de ladite ligne spectrale, se trouvent deux composantes spectrales superposées, appartenant respectivement aux dites deux images du spectre,
ladite méthode étant **caractérisée par le fait qu'**elle comprend en outre les étapes suivantes :

- détecter en une pluralité de points de ladite ligne spectrale, l'intensité lumineuse qui consiste en un signal de battement entre lesdites deux composantes spectrales superposées,
- déterminer en ces points, la phase dudit signal de battement,
- dériver de ladite phase du signal de battement, la phase spectrale de ladite impulsion, en ces points.

2. Méthode selon la revendication 1, dans laquelle ladite impulsion fait partie d'un train d'impulsions à un taux de répétition donné et dans laquelle le décalage entre les deux images égale un nombre entier de décalages spectraux entre deux modes voisins du spectre associé audit train d'impulsions.

3. Dispositif pour mettre en oeuvre la méthode de la revendication 1 ou 2, ledit dispositif comprenant un élément dispersif (7) et une lentille (L4) pour créer sur une droite, appelée « ligne spectrale », une image du spectre en fréquence associé à ladite impulsion, **caractérisé en ce que** ledit dispositif comprend en outre :

- un prisme de Wollaston (3), pour créer deux faisceaux (4,5) distincts sans différence de chemin optique, en déviant différemment, mais de manière symétrique par rapport à l'axe optique (10), les deux composantes de polarisation des rayons contenus dans ledit faisceau (2),
- un polariseur (6), pour faire interférer lesdites deux composantes de polarisation,
- des moyens de détection (11), pour détecter l'intensité et la phase en plusieurs points de la ligne spectrale.

4. Dispositif selon la revendication 3, comprenant en plus un dispositif afocal, placé entre ledit polariseur (6) et l'élément dispersif (7).

5. Dispositif selon la revendication 4, dans lequel ledit dispositif afocal consiste en deux lentilles (L2, L3), constituant un télescope.

6. Dispositif selon la revendication 4, dans lequel ledit dispositif afocal consiste en un assemblage de deux prismes anamorphiques.

7. Dispositif pour mettre en oeuvre la méthode de la revendication 1 ou 2, ledit dispositif comprenant un élément dispersif (7) et une lentille (L4) pour créer sur une droite, appelée « ligne spectrale », une image du spectre en fréquence associé à ladite impulsion, **caractérisé en ce que** ledit dispositif comprend en plus :

- au moins un miroir (30,31,32), ledit miroir comprenant deux parties de miroir décalées l'une vis-à-vis de l'autre.
- des moyens de détection (11), pour détecter l'intensité et la phase en plusieurs points de la ligne spectrale.

8. Dispositif selon la revendication 7, dans lequel lesdites deux parties de miroir sont décalées par une rotation d'une partie vis-à-vis de l'autre partie.

9. Dispositif selon la revendication 7, dans lequel lesdites deux parties de miroir sont décalées par une translation d'une partie vis-à-vis de l'autre partie.

10. Dispositif selon l'une quelconque des revendications 3 à 9 , dans lequel lesdits moyens de détection consistent en une caméra à balayage.

11. Dispositif selon l'une quelconque des revendications 3 à 9, dans lequel lesdits moyens de détection consistent en une photodiode rapide associée à un oscilloscope rapide.

12. Dispositif selon l'une quelconque des revendications 3 à 11, dans lequel ledit élément dispersif consiste en un réseau (7) de diffraction.

13. Dispositif selon l'une quelconque des revendications 3 à 11, dans lequel ledit élément dispersif consiste en un prisme.

FIG. 1

FIG. 2

FIG. 3

FIG. 4

FIG. 5

FIG. 6

FIG. 7

EP 1 480 028 A1

FIG. 8

FIG. 9

FIG. 10

FIG. 11

FIG. 12

EP 1 480 028 A1

**Office européen des brevets**

**RAPPORT DE RECHERCHE EUROPEENNE**

Numéro de la demande

EP 03 44 7116

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| D,X | US 6 025 911 A (STEFFEN PRIEN ET AL) 15 février 2000 (2000-02-15) | 1,2 | G01J11/00 G04F13/02 |
| A | * colonne 3, ligne 37 - colonne 5, ligne 30 * * figure 2 * | 3,7 | |
| A | LAI M ET AL: "COMPLETE DIAGNOSTIC OF ULTRASHORT PULSES WITHOUT NONLINEAR PROCESS" OPTICS COMMUNICATIONS, NORTH-HOLLAND PUBLISHING CO. AMSTERDAM, NL, vol. 88, no. 4, 5, 6, 1 avril 1992 (1992-04-01), pages 319-325, XP000261463 ISSN: 0030-4018 * page 320, colonne 1, alinéa 5 - colonne 2, alinéa 2 * * figure 1 * | 1,3,7 | |
| A | CHU K C ET AL: "DIRECT MEASUREMENT OF THE SPECTRAL PHASE OF FEMTOSECOND PULSES" OPTICS LETTERS, OPTICAL SOCIETY OF AMERICA, WASHINGTON, US, vol. 20, no. 8, 15 avril 1995 (1995-04-15), pages 904-906, XP000499613 ISSN: 0146-9592 * page 904, colonne 2, alinéa 1 - page 905, colonne 1, alinéa 1 * * figure 1 * | 1 | DOMAINES TECHNIQUES RECHERCHES (Int.Cl.7) G01J G04F |
| A | US 5 781 293 A (DUNCAN ALAN JAMES ET AL) 14 juillet 1998 (1998-07-14) * colonne 5, ligne 35 - ligne 56 * * figures 5,6,11 * | 3,7 | |

Le présent rapport a été établi pour toutes les revendications

| Lieu de la recherche | Date d'achèvement de la recherche | Examinateur |
|---|---|---|
| MUNICH | 23 septembre 2003 | Jacquin, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

**ANNEXE AU RAPPORT DE RECHERCHE EUROPEENNE
RELATIF A LA DEMANDE DE BREVET EUROPEEN NO.**

EP 03 44 7116

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-09-2003

| Document brevet cité au rapport de recherche | | Date de publication | Membre(s) de la famille de brevet(s) | | Date de publication |
|---|---|---|---|---|---|
| US 6025911 | A | 15-02-2000 | AUCUN | | |
| US 5781293 | A | 14-07-1998 | AU | 7129494 A | 06-02-1995 |
| | | | DE | 4494905 T0 | 22-08-1996 |
| | | | WO | 9502171 A1 | 19-01-1995 |
| | | | GB | 2294778 A ,B | 08-05-1996 |

Pour tout renseignement concernant cette annexe : voir Journal Officiel de l'Office européen des brevets, No.12/82